# EUROPEAN PATENT APPLICATION

(11) **EP 3 629 632 A1**
(43) Date of publication of application: **01.04.2020**
(21) Application number: 18825269.6
(22) Date of filing: 25.06.2018
(51) Int. Cl.: H04W 52/02

(54) **BASE STATION CONTROL METHOD AND APPARATUS, AND DEVICE**

(30) Priority: 28.06.2017 CN 201710512395
(71) Applicant: ZTE Corporation, Shenzhen, Guangdong 518057 (CN)
(72) Inventor: LIU, Shaolong, Shenzhen Guangdong 518057 (CN)
(74) Representative: Baudler, Ron
(86) International application number: PCT/CN2018/092674
(87) International publication number: WO 2019/001393

(57) **Abstract**

Disclosed in the present application are a base station control method, a base station control apparatus, and a base station control device. The base station control method includes: detecting whether a registered user equipment exists in a target region; and sending instruction information to a base station in the target region according to the detection result. The base station in the target region is controlled, according to the instruction information, to enter or exit from an energy saving state.

## Description

### TECHNICAL FIELD

The present disclosure relates to the field of mobile communication, in particular to a base station control method and apparatus, and a device.

### BACKGROUND

In LTE (Long Term Evolution) systems, base stations may turn off radio frequency circuits for saving electric energy when no radio resource control (RRC) connection exists. However, in indoor scenes of closed regions such as stations, shopping malls and stadiums, a large number of small power base stations are used for coverage. If the base stations enter an energy saving state when no RRC connection exists, for those users who have already registered but have not opened an RRC connection, when they need to open the RRC connection, the base stations are already in an energy saving state, so that the users cannot use the network. At present, according to methods for solving the above problem, the base stations in the indoor scenes are set, so that the base stations are always in a running state, and the indoor users can use the network at any time, consequently, the energy losses of the base stations are excessively high, and unnecessary energy waste is caused.

### SUMMARY

In one aspect, the present disclosure provides a base station control method, including: detecting whether a registered user equipment (UE) exists in a target region; and sending instruction information to a base station in the target region according to the detection result so as to instruct the base station in the target region to enter or exit from an energy saving state. When the detection result is that no registered UE exists in the target region, the instruction information is used for instructing the base station in the target region to enter the energy saving state. When the detection result is that at least one registered UE exists in the target region, the instruction information is used for instructing the base station in the target region to exit from the energy saving state.

In another aspect, the present disclosure further provides a base station control method, including: receiving, by a base station in a target region, instruction information; and enabling the base station in the target region to enter or exit from an energy saving state according to the instruction information. When no registered UE exists in the target region, the instruction information is used for instructing the base station in the target region to enter the energy saving state. When at least one registered UE exists in the target region, the instruction information is used for instructing the base station in the target region to exit from the energy saving state.

In another aspect, the present disclosure further provides a base station control apparatus, including: a detecting module adapted to detect whether a registered UE exists in a target region; and a sending module adapted to send instruction information to a base station in the target region according to the detection result so as to instruct the base station in the target region to enter or exit from an energy saving state. When the detection result is that no registered UE exists in the target region, the instruction information is used for instructing the base station in the target region to enter the energy saving state. When the detection result is that at least one registered UE exists in the target region, the instruction information is used for instructing the base station in the target region to exit from the energy saving state.

In another aspect, the present disclosure further provides a base station control apparatus, including: a receiving module adapted to enable a base station in a target region to receive instruction information; and a control module adapted to enable the base station in the target region to enter or exit from an energy saving state according to the instruction information. When no registered UE exists in the target region, the instruction information is used for instructing the base station in the target region to enter the energy saving state. When at least one registered UE exists in the target region, the instruction information is used for instructing the base station in the target region to exit from the energy saving state.

In another aspect, the present disclosure further provides a base station control device, including: a processor, and a memory coupled to the processor; the memory stores a program executable on the processor; and when the program is executed by the processor, the steps of the base station control method described herein are implemented.

In another aspect, the present disclosure further provides a computer readable storage medium storing program codes which, when executed by a processor, cause the processor to implement the steps of the base station control method described herein.

### BRIEF DESCRIPTION OF THE DRAWINGS

In order to more clearly illustrate the technical solutions of the embodiments of the present disclosure, the drawings required by the embodiments or the related art description will be briefly described below. Obviously, the drawings in the following description are only some embodiments of the present disclosure. For those skilled in the art, other drawings can be obtained according to these drawings without any creative work, wherein:
Fig. 1 is a flow chart illuminating a base station control method according to some embodiments of the present disclosure;
Fig. 2 is a flow chart illuminating a base station control method according to some embodiments of the present disclosure;
Fig. 3 is a structure block diagram illuminating a base station control apparatus according to some embodiments of the present disclosure; and
Fig. 4 is a structure block diagram illuminating a base station control apparatus according to some embodiments of the present disclosure.

### DETAILED DESCRIPTION

The technical solutions in the embodiments of the present disclosure will be clearly and completely described below in conjunction with the accompanying drawings in the embodiments of the present disclosure. Obviously, the described embodiments are only a part of the embodiments of the present disclosure, but not all of the embodiments. All other embodiments obtained by those skilled in the art based on the embodiments of the present disclosure without creative efforts are within the scope of the present disclosure.

It should be noted that the terms "first", "second" and the like in the specification and claims of the present disclosure as well as the accompanying drawings are used for distinguishing similar objects, and are not necessarily used to describe a particular order or precedence order.

Embodiments of the present disclosure may operate in a long term evolution (LTE) system (but not limited to an LTE system). A network architecture of the system may include a core network, a base station and UEs. The embodiments of the present disclosure provide a base station control method operable on the above network architecture. It should be noted that the operating environment of the base station control method is not limited to the foregoing network architecture.

In the related art, the LTE system establishes tracking areas (TAs) for facilitating management of the UEs. When an UE is in an idle state, the core network can know the TA where the UE is located. Meanwhile, when the UE in the idle state needs to be paged, paging must be performed in all cells of the TA registered by the UE. The TA is a configuration of cell level. Multiple cells may be configured with a same TA, and one cell belongs to one TA only. Wherein, one cell may be one base station. A tracking area code (TAC) is a TA identifier for distinguishing different TAs. Multiple TAs form a TA list. TA information of the base station is configured by the core network to the base station and broadcasted on air interfaces by the base station.

For example, multiple base stations are configured in an indoor region. Some base stations are configured with a same TA by the core network, and the other base stations are configured with different TA. Therefore, a TA list for the indoor region is formed. When an UE enters the indoor region and initiates registration, the core network allocates the TA list to the UE. When the UE moves within the TA list (that is, when moving in the indoor region), TAs do not need to be updated, and thus frequent interaction with the network is reduced. When the UE enters a new TA which is not in the registered TA list (e.g., when the UE leaves the indoor region), the TA needs to be updated, and a new TA list is allocated by the core network to the UE. The newly allocated TA list may include some TAs in the original TA list.

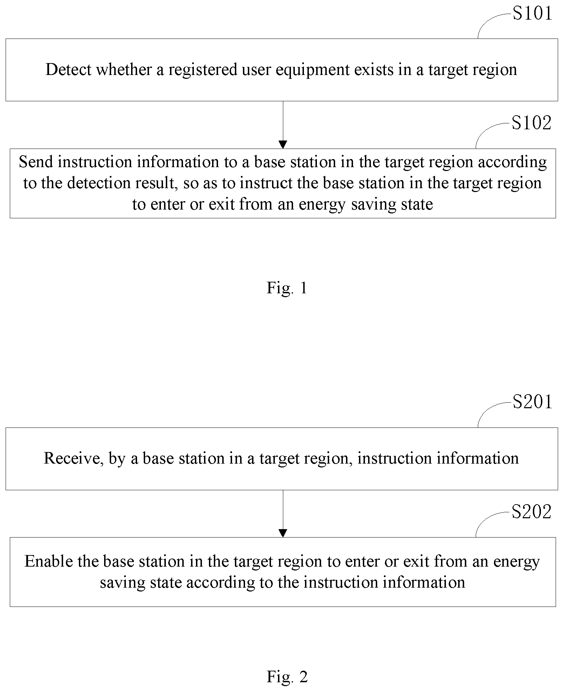

In one aspect, the present disclosure provides a base station control method applied to a core network. Fig. 1 is a flow chart illuminating a base station control method according to some embodiments of the present disclosure.

As shown in Fig. 1, in some embodiments, the base station control method includes the following steps S101 and S102.

At step S101, it is detected whether a registered UE exists in a target region.

At step S102, instruction information is sent to a base station in the target region according to the detection results for instructing the base station in the target region to enter or exit from an energy saving state. In step S102, when the detection result is that no registered UE exists in the target region, the instruction information is used for instructing the base station in the target region to enter the energy saving state. When the detection result is that at least one registered UE exists in the target region, the instruction information is used for instructing the base station in the target region to exit from the energy saving state.

According to the base station control method, the core network detects whether a registered UE exists in the target region, and sends instruction information to the base station in the target region according to different detection results. Therefore, the base station in the target region can enter or exit from the energy saving state according to the instruction information. In this way, the problem that the base station is still running when no registered users exist in the indoor region, and consequently unnecessary power consumption is caused is solved. Meanwhile, when a registered user exists in the indoor region, the base station can exit from the energy saving state, so that the user can use the network at any time.

Steps of the above method will be described in more detail below.

Firstly, before step S101, a first TA parameter of the base station in the target region is configured by the core network, and the first TA parameter is different from a second TA parameter of a base station in other regions except the target region. It should be noted that in some embodiments, the target region is an indoor region, such as a closed mall, a closed office building and a closed basketball court. In some embodiments, the TA parameter may include, for example, TAC, but the present disclosure is not limited thereto, and any parameter that can distinguish the TAs may be applied to the present disclosure. For example, for all the base stations in the target region, the first TA parameter may include a same TAC, and may also include different TACs. For example, there are three base stations, namely the base station 1, the base station 2 and the base station 3 exist in the target region. In one case, the base station 1, the base station 2 and the base station 3 are configured with a same TAC by the core network. In another case, the core network configures the base station 1 with TAC1, and the base station 2 and the base station 3 with the TAC2. After the TA parameter (such as TA name and TAC) is configured for each base station in the target region, a TA list is formed. The TA list includes the TA parameter for each base station in the target region (e.g., including a list of base station names, TA names and TACs associated with each other).

The other region except the target region may be an outdoor region or an indoor region. The second TA parameter of the base station in the region other than the target region is different from the first TA parameter, that is, the TA parameter allocated to the base station in the other region except the target region cannot be allocated to the base stations in the target region. For example, there are three base stations, namely the base station 1, the base station 2 and the base station 3 exist in the target region. The core network configures the base station 1 with a TAC1, and the base station 2 and base station 3 with TAC2s, then the core network can no longer configure the TAC1 and the TAC2 to a base station other than the base stations in the target region. In other words, the TA list of the target region has to be completely different from the TA list of a second region without repeating parts. Only then, the core network is able to detect changes in the number of the registered UE in the target region, as described later.

After the core network configures the first TA parameter of the base station in the target region, the base station in the target region configure an energy saving enable parameter thereof. Specifically, the base station at an entrance of the target region configures the energy saving enable parameter as energy saving prohibition, and the base station at a non-entrance part of the target region configures the energy saving enable parameter as energy saving permission. In an embodiment, the energy saving enable parameter of only one base station at the entrance of the target region is set as energy saving prohibition, and the energy saving enable parameter of the base station at the remaining part of the target region is set as energy saving permission, and thus the energy saving effect can be better. The reason for setting the energy saving enable parameter of the base station according to the above method is that if all the base stations enter the energy saving state after it is determined that no registered UE exists in the target region, and when a new UE enters the target region, a registration cannot be initiated because all the base stations are in the energy saving state.

After the base station in the target region configures the energy saving enable parameter, the base station in the target region sends information indicating whether the base station supports the energy saving function when no registered UE exists to the core network. Correspondingly, the core network receives information sent by the base station in the target region and indicating whether the base station supports the energy saving function when no registered UE exists. Herein, the information indicating whether the base station supports the energy saving function when no registered UE exists is used for that the core network may send the information whether a registered UE exists in the target region only to the base station supporting the function according to the information, and does not send the information to the base station not supporting the function. In this way, unnecessary information interaction can be reduced. According to the embodiments of the present disclosure, after the core network receives information indicating whether the base station support the energy saving function when no registered UE exists, the information is recorded and associated with the TA list of the target region. Since the TA list of the target region includes the TA name and TAC of each base station, the TA list can be associated with the information indicating whether each base station supports the energy saving function when no registered UE exists.

After the above steps are completed, in step S101, the core network detects whether a registered UE exists in the target region. There are many ways to detect whether a registered UE exists in the target region. In an embodiment, the core network detects the number of registered UE in the target region according to the first TA parameter and the second TA parameter, and generates the detection result. In the embodiment, the reason why the core network can detect the number of registered UE in the target region is that the TA list of the target region is completely different from the TA list of a region other than the target region. When the UE enters or leaves the target region, the UE initiates a new registration, and the core network allocates a new TA list to the UE. At this time, the core network can know the changes of the registered UE in the target region.

Specifically, when the UE enters the target region from another region, the UE detects that the TAC in the target region is not in the TA list of the UE, the UE re-initiates a registration, and the core network allocates the TA list of the target region to the UE. At this point, the core network can know that one registered UE is added to the target region. When the UE enters the other region from the target region, the UE detects that the TAC in the other region is not in the TA list of the target region, then the UE re-initiates a registration, and the core network allocates the TA list of the other region to the UE. At the moment, the core network can know that one registered UE is reduced from the target region. It should be noted that, at the beginning, no registered user exists in the target region (for example, no mobile phone exists in a basketball court by manual checking). After the system is started, the first UE enters the target region and initiates the registration, and the core network can begin to record the number of the registered UE in the target region. When the core network detects that the number of the registered UE in the target region is 0, the core network generates the detection result that no registered UE exists in the target region; and when the core network detects that the number of registered UE in the target region is not zero, the core network generates the detection result that at least one registered UE exists in the target region.

In step S102, the core network sends the instruction information to the base station in the target region according to the detection result, wherein the instruction information is configured to instruct the base station in the target region to enter or exit from the energy saving state; and accordingly, the base station in the target region receives the instruction information. It should be noted that, as described above, the core network selectively sends the instruction information, and only sends the information to the base station supporting the energy saving function when no registered UE exists in the target region. Specifically, in step S102, firstly, the core network generates instruction information according to the detection result. When the detection result is that no registered UE exists in the target region, the instruction information instructing the base station to enter the energy saving state is generated. When the detection result is that at least one registered UE exists in the target region, the instruction information instructing the base station to exit from the energy saving state is generated. Correspondingly, when the instruction information sent by the core network is used for instructing the base station to enter the energy saving state, the base station enters the energy saving state. When the instruction information sent by the core network is used for instructing the base station to exit from the energy saving state, the base station exits from the energy saving state.

According to the above base station control method, the core network configures base station in the target region with the TA parameter completely different from the TA parameter of the base station in other regions except the target region (thus the TA list without repeating parts with TA list of other regions can be formed), the number of the registered UE in the target region is detected through differences of the TA parameters, the instruction information is sent to the base station, and thus the base station can be controlled to enter or exit from the energy saving state according to the instruction information. Accordingly, the problem that the base station is still running when no registered user exists in the indoor region, and unnecessary energy consumption is caused is solved. Meanwhile, when a registered user exist in the indoor region, the base station can exit from the energy saving state, so that the user can use the network at any time.

In another aspect, the present disclosure further provides a base station control method applied to the base station in the target region. Fig. 2 is a flow chart illuminating a base station control method according to some embodiments of the present disclosure.

As shown in Fig. 2, in some embodiments, the base station control method includes the following steps S201 and S202.

At step S201, a base station in the target region receives instruction information.

At step S202, enabling the base station in the target region to enter or exit from an energy saving state according to the instruction information. In step S202, when no registered UE exists in the target region, the instruction information is used for instructing the base station in the target region to enter the energy saving state. When ate least one registered UE exists in the target region, the instruction information is used for instructing the base stations in the target region to exit from the energy saving state.

Steps of the above method will be described in more detail below.

Before step S201, the base station in the target region configures an energy saving enable parameter thereof. Specifically, the base station at an entrance of the target region configures the energy saving enable parameter as energy saving prohibition, and the base station at a non-entrance part of the target region configures the energy saving enable parameter as energy saving permission. In an embodiment, the energy saving enable parameter of only one base station at the entrance of the target region is set as energy saving prohibition, and the energy saving enable parameter of the base station at the remaining part of the target region is set as energy saving permission, and thus the energy saving effect can be better. The reason for setting the energy saving enable parameter of the base station according to the above method is that if all the base stations enter the energy saving state after it is determined that no registered UE exists in the target region, and when a new UE enters the target region, a registration cannot be initiated because all the base stations are in the energy saving state.

After the base station in the target region configures the energy saving enable parameter, the base station in the target region sends information indicating whether the base station supports the energy saving function when no registered UE exists to the core network. Correspondingly, the core network receives information sent by the base station in the target region and indicating whether the base station supports the energy saving function when no registered UE exists. Herein, the information indicating whether the base station supports the energy saving function when no registered UE exists is used for that the core network may send the information whether a registered UE exists in the target region only to the base station supporting the function according to the information, and does not send the information to the base station not supporting the function. In this way, unnecessary information interaction can be reduced.

In step S201, the base station in the target region receives the instruction information sent by the core network. It should be noted that, as described above, the core network selectively sends the instruction information, and only sends the information to the base stations supporting the energy saving function when no registered UE exists in the target region.

In step S202, the base station in the target region enters or exits from the energy saving state according to the instruction information. Specifically, when the instruction information received by the base station in the target region is used for instructing the base station to enter the energy saving state, the base station enters the energy saving state; when the instruction information received by the base station in the target region is used for instructing the base station to exit from the energy saving state, the base station exits from the energy saving state.

According to the above base station control method, the base station in the target region enters or exits from the energy saving state according to the instruction information. Thus, the problem that the base station is still running when no registered user exists in the indoor region, and unnecessary energy consumption is caused is solved. Meanwhile, when a registered users exist in the indoor region, the base station can exit from the energy saving state, so that the user can use the network at any time.

A base station control method according to an embodiment of the present disclosure will be described more specifically below by taking an application environment as an example. The application environment is an office building with five low-power base stations covering every corner of the office building, and users may use the network after entering the office building. The five low-power base stations are the base station 1, the base station 2, the base station 3, the base station 4 and the base station 5, respectively, and the base station 1 is located at an entrance of the office building.

In the present embodiment, an example of the base station control method includes the following steps S301 to S307.

At step S301, the core network configures a first TA parameter of the base stations (base stations 1 to 5) in the office building. The first TA parameter includes TA names (such as TA1, TA2 and TA3) and TACs (such as TAC1, TAC2 and TAC3). After the parameter of all base stations are configured, the following first TA list is formed.

| | | |
|---|---|---|
| Base station 1 | TA1 | TAC1 |
| Base station 2 | TA2 | TAC2 |
| Base station 3 | TA2 | TAC2 |
| Base station 4 | TA2 | TAC2 |
| Base station 5 | TA3 | TAC3 |

It should be noted that the first TA list of the office building is completely different from a second TA list of other regions except the office building.

At step S302, the base stations 1 to 5 configure an energy saving enable parameter thereof. For the base station 1, since the base station 1 is located at the entrance of the office building, the base station 1 configures the energy saving enable parameter as energy saving prohibition. For the base stations 2 to 5, the energy saving enable parameter is configured as energy saving permission.

At step S303, the base stations 1 to 5 respectively send information whether the base station supports the energy saving function when no registered UE exists to the core network. Correspondingly, the core network receives the above information, and the core network records the base stations supporting the energy saving function when no registered UE exists, and a correspondence relationship between the base stations and the first TAlist is formed. For example, the correspondence relationship is as follows:

| | | | |
|---|---|---|---|
| Base station 1 | TA1 | TAC1 | Supports the energy saving function when no registered UE exists |
| Base station 2 | TA2 | TAC2 | Does not support the energy saving function when no registered UE exists |
| Base station 3 | TA2 | TAC2 | Supports the energy saving function when no registered UE exists |
| Base station 4 | TA2 | TAC2 | Supports the energy saving function when no registered UE exists |
| Base station 5 | TA3 | TAC3 | Supports the energy saving function when no registered UE exists |

At step S304, the core network detects the number of the registered UE in the office building according to the first TA list and the second TA list, and generates a detection result. The core network generates instruction information according to the detection result, and sends the instruction information to the base station 1, the base station 3, the base station 4 and the base station 5 in the office building (since the base station 2 does not support the energy saving function when no registered UE exists, the instruction information is not sent to the base station 2).

In the embodiment, no registered UE initially exists in the office building, and the base stations 1 to 5 are initially in a running state. After a time period t, there is still no UE entering the office building, and the core network does not allocate the first TA list to any UE. At this time, the core network detects that the number of the registered UE in the office building is 0, and the core network generates the detection result that no registered UE exists in the office building. Then, the core network generates information for instructing the base stations to enter the energy saving state according to the detection result, and sends the information to the base station 1, the base station 3, the base station 4, and the base station 5. The time t may be set in advance, for example, 10 minutes, 20 minutes or 30 minutes. In the embodiment, the time t may be set to 30 minutes.

After time shorter than the time t, an UE enters the office building. In the embodiment, UE1 enters the office building at the 20th minute. Since the second TA list where the UE1 is previously located is completely different from the first TA list of the office building where the UE1 is currently located, the UE1 needs to re-initiate a registration, and the core network allocates the first TA list to the UE1. At this time, the number of the registered UE in the office building is recorded by the core network as 1. Subsequently, UE2, UE3, UE4 and UE5 enter the office building, and the number of the registered UE in the office building is recorded by the core network as 5. Afterwards, the UE1 leaves the office building, since the first TA list where the UE1 is previously located is different from the second TA list of the regions where the UE1 is currently located and other than the office building, the UE1 needs to re-initiate a registration, and the core network allocates the second TA list to the UE1. At this time, the number of the registered UE in the office building is recorded by the core network as 4. Finally, UE2, UE3, UE4 and UE5 leave the scope of the office building successively. When the last UE leaves, the number of the registered UE in the office building is recorded by the core network as 0, and the core network generates the detection result that no registered UE exists in the office building. Then, the core network generates instruction information for instructing the base stations to enter the energy saving state according to the detection result, and sends the instruction information to the base station 1, the base station 3, the base station 4 and the base station 5.

At step S305, the base station 1, the base station 3, the base station 4 and the base station 5 receive the instruction information for instructing the base stations to enter the energy saving state, and according to the energy saving enable parameter, the base station 3, the base station 4 and the base station 5 are controlled to enter the energy saving state and the base station 1 is still in a running state.

Since the base station 1 is located at the entrance of the office building, the energy saving enable parameter of the base station 1 is set as energy saving prohibition (although the base station 1 supports the energy saving function when no registered UE exists, the base station 1 cannot enter the energy saving state due to the set parameter of the base station 1), and the base station 1 remains in the running state.

At step S306, UE1 initiates a registration when re-entering the office building. Since the base station 1 is in the running state, the core network can allocate the first TA list to the UE1. At this time, the core network records the number of the registered UE in the office building as 1, and the core network generates the detection result that at least one registered UE exists in the office building. Then, the core network generates instruction information for instructing the base station to exit from the energy saving state according to the detection result, and sends the instruction information to the base station 1, the base station 3, the base station 4 and the base station 5.

At step S307, the base station 1, the base station 3, the base station 4 and the base station 5 receive the instruction information for instructing the base station to exit from the energy saving state, and according to the energy saving enable parameter, the base station 3, the base station 4 and the base station 5 are controlled to exit from the energy saving state and the base station 1 is still in the running state.

According to the base station control method, the core network allocates the first TA list to the office building, and allocates the second TA list to other regions. Since the two TA lists are completely different, the core network may detect the number of the registered UE in the office building, and sends the instruction information to the base station, and thus the base station can be controlled to enter or exit from the energy saving state according to the instruction information. In this way, the problem that the base station is still running when no registered user exists in the indoor region, and consequently unnecessary power consumption is caused is solved. Meanwhile, when a registered user exist in the indoor region, the base station can exit from the energy saving state, so that the user can use the network at any time.

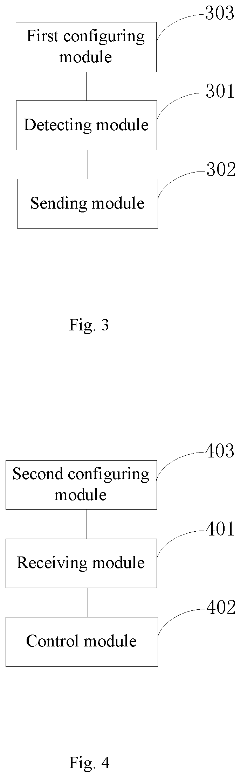

In another aspect, the present disclosure further provides a base station control apparatus applied to a core network. Fig. 3 is a structure block diagram illuminating a base station control apparatus according to some embodiments of the present disclosure.

As shown in Fig. 3, in some embodiments, the base station control apparatus includes a detecting module 301 adapted to detect whether a registered UE exists in a target region; and a sending module 302 adapted to send instruction information to a base station in the target region according to the detection result so as to instruct the base station in the target region to enter or exit from the energy saving state. When the detection result is that no registered UE exists in the target region, the instruction information is used for instructing the base station in the target region to enter the energy saving state, and when the detection result is that at least one registered UE exists in the target region, the instruction information is used for instructing the base station in the target region to exit from the energy saving state.

In some embodiments, the base station control apparatus further includes a first configuring module 303 adapted to configure a first TA parameter of the base station in the target region. The first TA parameter is different from a second TA parameter of a base station in other regions except the target region.

In some embodiments, the detecting module 301 is further adapted to detect the number of the registered UE in the target region according to the first TA parameter and the second TA parameter, and generate the detection result. In some embodiments, the step of detecting the number of the registered UE in the target region, and generating the detection result includes: generating the detection result that no registered UE exists in the target region when the detected number of the registered UE in the target region is 0; and generating the detection result that at least one registered UE exists in the target region when the detected number of registered UE in the target region is not zero.

It should be noted that an energy saving enable parameter of the base station at an entrance of a target region is set as energy saving prohibition, and the energy saving enable parameter of the base station at a non-entrance part of the target region is set as energy saving permission.

In another aspect, the present disclosure also provides a base station control apparatus applied to a base station in a target region. Fig. 4 is a structure block diagram illuminating a base station control apparatus according to some embodiments of the present disclosure.

As shown in Fig. 4, in some embodiments, the base station control apparatus includes a receiving module 401 adapted to the enable base station in the target region to receive instruction information, and a control module 402 adapted to enable the base station in the target region to enter or exit from an energy saving state according to the instruction information. When no registered UE exists in the target region, the instruction information is used for instructing the base station in the target region to enter the energy saving state, and when at least one registered UE exists in the target region, the instruction information is used for instructing the base station in the target region to exit from the energy saving state.

In some embodiments, the base station control apparatus further includes a second configuring module 403 adapted to enable the base station in the target region to configure an energy saving enable parameter thereof. The base station at an entrance of the target region configures the energy saving enable parameter as energy saving prohibition, and the base station at a non-entrance part of the target region configures the energy saving enable parameter as energy saving permission.

It should be noted that the detecting module 301, the sending module 302, the first configuring module 303, the receiving module 401, the control module 402 and the second configuring module 403 may be implemented by software or hardware. The latter may be implemented in the following manner, but is not limited thereto: functions of the above modules are all implemented by a same processor, or the functions of any combination of the above modules are implemented by multiple processors.

In another aspect, the present disclosure further provides a base station control device, and particularly provides a core network.

In some embodiments, the core network includes a processor and a memory coupled to the processor. A program operable on the processor is stored on the memory. When the program is executed by the processor, the following steps are performed: detecting whether a registered UE exists in the target region; and sending instruction information to a base station in a target region according to the detection result so as to instruct the base station in the target region to enter or exit from an energy saving state. When the detection result is that no registered UE exists in the target region, the instruction information is used for instructing the base station in the target region to enter the energy saving state, and when the detection result is that at least one registered UE exists in the target region, the instruction information is used for instructing the base station in the target region to exit from the energy saving state.

In some embodiments, when the program is executed by the processor, the following step is further implemented: configuring a first TA parameter of the base station in the target region. The first TA parameter is different from a second TA parameter of a base station in other regions except the target region.

In some embodiments, the step of detecting whether a registered UE exists in the target region includes: detecting the number of the registered UE in the target region according to the first TA parameter and the second TA parameter, and generating the detection result.

In some embodiments, the step of detecting the number of the registered UE in the target region, and generating the detection result includes: generating the detection result that no registered UE exists in the target region when the detected number of the registered UE in the target region is 0; and generating the detection result that at least one registered UE exists in the target region when the detected number of the registered UE in the target region is not zero.

An energy saving enable parameter of the base station at an entrance of the target region is configured as energy saving prohibition, and the energy saving enable parameter of the base stations at a non-entrance part of the target region is configured as energy saving permission.

In some embodiments, the first TA parameter and the second TA parameter each includes a tracking region code (TAC).

In an embodiment, the operation steps in the embodiment shown in Fig. 1 are implemented when the program is executed by the processor.

In another aspect, the present disclosure further provides a base station control device, including a processor and a memory coupled to the processor. A program operable on the processor is stored on the memory. When the program is executed by the processor, the following steps are implemented: receiving, by a base station in a target region, instruction information; and enabling the base station in the target region to enter or exit from an energy saving state according to the instruction information. When no registered UE exists in the target region, the instruction information is used for instructing the base station in the target region to enter the energy saving state, and when at least one registered UE exists in the target region, the instruction information is used for instructing the base station in the target region to exit from the energy saving state.

In some embodiments, when the program is executed by the processor, the following step is also implemented: enabling the base station in the target region to configure an energy saving enable parameter thereof. The base station at an entrance of the target region configures the energy saving enable parameter as energy saving prohibition, and the base station at a non-entrance part of the target region configures the energy saving enable parameter as energy saving permission.

In some embodiments, the instruction information is based on a first TA parameter of the base station in the target region and a second TA parameter of a base station in other regions except the target region. The first TA parameter is different from the second TA parameter.

In some embodiments, the first TA parameter and the second TA parameter each includes a tracking region code (TAC).

In an embodiment, the operation steps in the embodiment shown in Fig. 2 are implemented when the base station control program is executed by the processor.

In another aspect, the embodiments of the present disclosure further provide a storage medium. In some embodiments, the storage medium may be configured to store a program code for performing the following steps: detecting whether a registered UE exists in a target region; and sending instruction information to a base station in the target region according to the detection result so as to instruct the base station in the target region to enter or exit from the energy saving state. When the detection result is that no registered UE exists in the target region, the instruction information is used for instructing the base station in the target region to enter the energy saving state, and when the detection result is that at least one registered UE exists in the target region, the instruction information is used for instructing the base station in the target region to exit from the energy saving state.

According to the embodiments of the present disclosure, the storage medium may include, but not limited to, various media capable of storing a program code, such as a USB flash disk, a read-only memory (ROM), a random access memory (RAM), a mobile hard disk, a diskette, or an optical disk.

According to the embodiments of the present disclosure, a processor performs the steps of the method described herein in accordance with the program code stored in the storage medium.

For specific examples of the present disclosure, reference may be made to the examples described in the foregoing embodiments and other implementation manners, and details are not described herein again.

In another aspect, the present disclosure further provides a storage medium. In some embodiments, the storage medium may be configured to store the program code for performing the following steps: receiving, by a base station in a target region, instruction information; and enabling the base station in the target region to enter or exit from an energy saving state according to the instruction information. When no registered UE exists in the target region, the instruction information is used for instructing the base station in the target region to enter the energy saving state, and when at least one registered UE exists in the target region, the instruction information is used for instructing the base station in the target region to exit from the energy saving state.

According to the embodiments of the present disclosure, the storage medium may include, but not limited to, various media capable of storing a program code, such as a USB flash disk, a read-only memory (ROM), a random access memory (RAM), a mobile hard disk, a diskette, or an optical disk.

According to the embodiments of the present disclosure, the processor performs the steps of the method described herein in accordance with the program code stored in the storage medium.

For specific examples of the present disclosure, reference may be made to the examples described in the foregoing embodiments and other implementation manners, and details are not described herein again.

It will be apparent to those skilled in the art that the various modules or steps of the present disclosure described above may be implemented by a general-purpose computing device, and the modules may be centralized on a single computing device or distributed across a network composed of multiple computing devices. According to the embodiments of the present disclosure, the modules or steps may be implemented through a program code executable by a computing device so as to be stored in a storage device for execution by the computing device, and in some cases, the steps shown or described may be performed in an order different than the order described herein, or may be separately fabricated into individual integrated circuit modules or a plurality of modules or steps thereof are fabricated into a single integrated circuit module. Accordingly, the present disclosure is not limited to any specific combination of hardware and software.

The embodiments disclosed in the present disclosure are as described above, but are merely used for facilitating understanding of the present disclosure, and are not intended to limit the present disclosure. Any modification and variation in the form and details of the implementation may be made by those skilled in the art without departing from the spirit and scope of the present disclosure, the protection scope of the present disclosure shall be subject to the scope defined by the appended claims.

## Claims

1. Abase station control method, comprising:
detecting whether a registered user equipment (UE) exists in a target region; and
sending instruction information to a base station in the target region according to the detection result to instruct the base station in the target region to enter or exit from an energy saving sate,
wherein, in response to the detection result is that no registered UE exists in the target region, the instruction information is used for instructing the base station in the target region to enter the energy saving state, and
in response to the detection result is that at least one registered UE exists in the target region, the instruction information is used for instructing the base station in the target region to exit from the energy saving state.

2. The method according to claim 1, further comprising:
configuring a first tracking area (TA) parameter of the base station in the target region;
wherein, the first TA parameter is different from a second TA parameter of a base station in other regions except the target region.

3. The method according to claim 2, wherein the step of detecting whether a registered UE exists in the target region comprises:
detecting the number of the registered UE in the target region according to the first TA parameter and the second TA parameter, and generating the detection result.

4. The method according to claim 3, wherein the step of detecting the number of the registered UE in the target region and generating the detection result comprises:
generating a detection result that no registered UE exists in the target region when the detected number of the registered UE in the target region is 0; and
generating a detection result that at least one registered UE exists in the target region when the detected number of the registered UE in the target region is not zero.

5. The method according to any one of claims 1 to 4, wherein an energy saving enable parameter of the base station at an entrance of the target region is configured as energy saving prohibition, and the energy saving enable parameter of the base station at a non-entrance part of the target region is configured as energy saving permission.

6. The method according to any one of claims 2 to 4, wherein the first TA parameter and the second TA parameter each comprises a tracking area code (TAC).

7. Abase station control method, comprising:
receiving, by a base station in a target region, instruction information; and
enabling the base station in the target region to enter or exit from an energy saving state according to the instruction information,
wherein when no registered user equipment (UE) exists in the target region, the instruction information is used for instructing the base station in the target region to enter the energy saving state, and
when at least one registered UE exists in the target region, the instruction information is used for instructing the base station in the target region to exit from the energy saving state.

8. The method according to claim 7, further comprising:
configuring, by the base station in the target region, an energy saving enable parameter of the base station,
wherein the base station at an entrance of the target region configures the energy saving enable parameter as energy saving prohibition, and the base station at a non-entrance part of the target region configures the energy saving enable parameter as energy saving permission.

9. The base station control method according to claim 7 or 8, wherein the instruction information is based on a first tracking area (TA) parameter of the base station in the target region and a second TA parameter of a base station in other regions except the target region, wherein the first TA parameter is different from the second TA parameter.

10. The base station control method according to claim 9, wherein the first TA parameter and the second TA parameter each comprises a tracking area code (TAC).

11. Abase station control apparatus, comprising:
a detecting module adapted to detect whether a registered user equipment (UE) exists in a target region; and
a sending module adapted to send instruction information to a base station in the target region according to the detection result so as to instruct the base station in the target region to enter or exit from an energy saving state,
wherein when the detection result is that no registered UE exists in the target region, the instruction information is used for instructing the base station in the target region to enter the energy saving state; and
when the detection result is that at least one registered UE exists in the target region, the instruction information is used for instructing the base station in the target region to exit from the energy saving state.

12. The base station control apparatus according to claim 11, further comprising:
a configuring module adapted to configure a first tracking area (TA) parameter of the base station in the target region,
wherein, the first TA parameter is different from a second TA parameter of a base station in other regions except the target region.

13. The base station control apparatus according to claim 12, wherein the detecting module is further adapted to detect the number of the registered UE in the target region according to the first TA parameter and the second TA parameter and generate the detection result.

14. The base station control apparatus according to claim 12 or 13, wherein the first TA parameter and the second TA parameter each comprises a tracking area code (TAC).

15. Abase station control apparatus, comprising:
a receiving module adapted to enable a base station in a target region to receive instruction information; and
a control module adapted to enable the base station in the target region to enter or exit from an energy saving state according to the instruction information;
wherein when no registered user equipment (UE) exists in the target region, the instruction information is used for instructing the base station in the target region to enter the energy saving state, and
when at least one registered UE exists in the target region, the instruction information is used for instructing the base station in the target region to exit from the energy saving state.

16. The base station control apparatus according to claim 15, further comprising: a configuring module adapted to enable the base station in the target region to configure an energy saving enable parameter of the base station,
wherein the base station at an entrance of the target region configures the energy saving enable parameter as energy saving prohibition, and the base station at a non-entrance part of the target region configures the energy saving enable parameter as energy saving permission.

17. The base station control apparatus according to claim 15 or 16, wherein the instruction information is based on a first tracking area (TA) parameter of the base station in the target region and a second TA parameter of a base station in other regions except the target region, wherein the first TA parameter is different from the second TA parameter.

18. The base station control apparatus according to claim 17, wherein the first TA parameter and the second TA parameter each comprises a tracking area code (TAC).

19. A base station control device, comprising: a processor and a memory coupled to the processor, wherein the memory stores a program executable on the processor, and when the program is executed by the processor, the processor implement the steps of the base station control method according to any one of claims 1 to 10.

20. A computer readable storage medium, storing program codes thereon, wherein when the program codes are executed by a processor, the processor implement the steps of the base station control method according to any one of claims 1 to 10.
